# EUROPEAN PATENT APPLICATION

(11) **EP 1 601 205 A1**
(43) Date of publication of application: **30.11.2005**
(21) Application number: 05253234.8
(22) Date of filing: 26.05.2005
(51) Int. Cl.: H04N 7/26

(54) **Moving image encoding/decoding apparatus and method**

(30) Priority: 27.05.2004 KR 2004037689
(71) Applicant: Daeyang Foundation, Seoul, 143-747 (KR); SAMSUNG ELECTRONICS CO., LTD., Suwon-si, Gyeonggi-do (KR)
(72) Inventor: Kim, Hae-kwang, Seoul (KR)
(74) Representative: Robinson, Ian Michael

(57) **Abstract**

Provided are a moving image encoding/decoding apparatus and method capable of eliminating an error that occurs when encoding moving image data. The moving image encoder includes a base layer encoder (410) receiving an original image and encoding the original image using a predetermined lossy encoding method and an enhancement layer encoder (410) receiving an error image created by decoding the encoded original image and receiving the original image, and losslessly entropy-encoding an error component obtained by subtracting the original image from the image with error. Therefore, an original moving image can be scalabely and losslessly encoded/decoded based on conventional moving image encoding/decoding technologies, thereby offering moving image services with desired quality.

## Description

The present invention relates to encoding and decoding of a moving image, and, more particularly, to a moving image encoding/decoding apparatus and method capable of eliminating from a moving image an error that occurs when encoding the moving image.

The amount of data included in a moving image is great compared with the amount of data included in a voice or a still image. Accordingly, a large hardware capacity including a memory is required to store or transmit such a large amount of data without processing it. Hence, a moving image needs to be compressed using an encoder before it is stored or transmitted and then received and reproduced by a decoder. There are two types of compression methods: lossy compression and lossless compression. Since the amount of data included in a moving image is large, the lossy compression method is used to reduce the amount of data. This compression method includes MPEG-1, MPEG-2, MPEG-4, H.263, and H.264.

When a moving image is compressed using one of these compression methods, some of the moving image is lost (hereinafter, referred to as an error) during discrete cosine transform (DCT), inverse DCT (IDCT), and quantization processes. Therefore, the resultant moving image is different from what it originally was.

According to the present invention there is provided an apparatus and method as set forth in the appended claims. Preferred features of the invention will be apparent from the dependent claims, and the description which follows.

The present invention provides a moving image encoding/decoding apparatus and method in which not only moving image data but also error information on the moving image data are provided. The error information is generated while the moving image data are encoded and decoded, thereby reproducing the moving image data without an error.

According to an aspect of the present invention, there is provided a moving image encoder including a base layer encoder receiving an original image and encoding the original image using a predetermined lossy encoding method; and an enhancement layer encoder receiving an error image created by decoding the encoded original image and receiving the original image, and losslessly entropy-encoding an error component obtained by subtracting the original image from the image with error.

According to another aspect of the present invention, there is provided a moving image decoder including a base layer decoder receiving a base layer bit stream created by encoding an original image using a predetermined lossy encoding method and decoding the base layer bit stream; and an enhancement layer decoder receiving an enhancement bit stream created by losslessly entropy-encoding an error component obtained by subtracting an original image from an image with error created by decoding the encoded original image and entropy-decoding the enhancement bit stream.

The moving image decoder further includes a subtracter subtracting the error component decoded by the enhancement layer decoder from a base layer image decoded by the base layer decoder and outputting the result of subtraction.

According to another aspect of the present invention, there is provided a moving image encoding method including receiving an original image and encoding the original image using a predetermined lossy encoding method; and receiving an error image created by decoding the encoded original image and receiving the original image, and losslessly entropy-encoding an error component obtained by subtracting the original image from the image with error.

According to another aspect of the present invention, there is provided a moving image decoding method including receiving a base layer bit stream created by encoding an original image using a predetermined lossy encoding method, decoding the base layer bit stream, and outputting a decoded base layer image; receiving an enhancement bit stream created by losslessly entropy-encoding an error component obtained by subtracting an original image from an image with error created by decoding the encoded original image and entropy-decoding the enhancement bit stream; and subtracting the entropy-decoded error component from the decoded base layer image and outputting the result.

The above and other features and advantages of the present invention will become more apparent by describing in detail exemplary embodiments thereof with reference to the attached drawings in which:
Figure 1 illustrates moving image frames included in a moving image;
Figure 2 is a block diagram of a conventional moving image encoder;
Figure 3 is a block diagram of another conventional moving image decoder;
Figure 4 is a block diagram of a scalable moving image encoder according to an embodiment of the present invention;
Figure 5 is a block diagram of a scalable moving image decoder according to an embodiment of the present invention;
Figure 6 is a flowchart illustrating a scalable moving image encoding method according to the present invention; and
Figure 7 is a flowchart illustrating a scalable moving image decoding method according to the present invention.

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

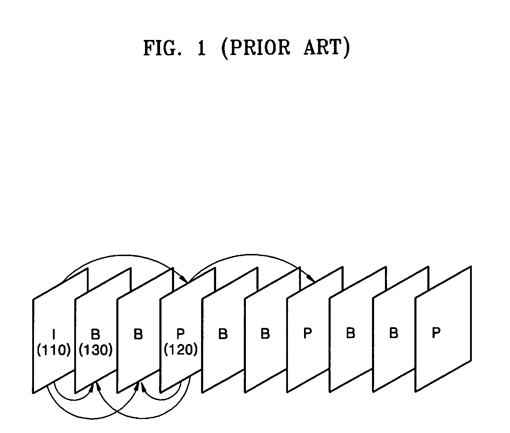

Figure 1 illustrates moving image frames included in a moving image. Moving image data is encoded and decoded based on a motion prediction technology. A prediction is made with reference to a previous frame or both previous and future frames based on a time axis. A frame referred to when encoding or decoding a current frame is called a reference frame. In block-based moving image encoding, a still image (frame) included in a moving image is divided into macro-blocks and a macro-block is divided into sub-blocks. Therefore, the motion of the still image is predicted and encoded on a block by block basis.

Referring to Figure 1, a moving image includes a series of still images. The still images are classified by group of picture (GOP), and each of the still images is called a frame. One GOP includes an I frame 110, a P frame 120, and a B frame 130. The I frame 110 is encoded without using a reference frame. On the other hand, the P frame 120 and the B frame 130 are encoded by motion estimation and correction using the reference frame.

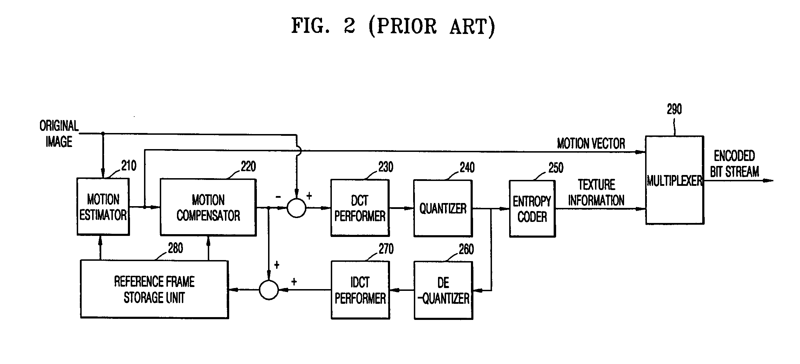

Figure 2 is a block diagram of a conventional moving image encoder. The moving image encoder includes a motion estimator 210, a motion compensator 220, a discrete cosine transform (DCT) performer 230, a quantizer 240, an entropy coder 250, a de-quantizer 260, an inverse DCT (IDCT) performer 270, a reference frame storage unit 280, and a multiplexer 290.

The motion estimator 210 searches the reference frame for a macro-block and outputs the difference between the position of an image in the macro-block of the reference frame and the position of the image in a macro-block of a current frame as a motion vector. In other words, the motion estimator 210 searches for a desired macro-block within a predetermined search area of the reference frame, finds a macro block most similar to what was desired, and outputs the distance travelled by the image, which is the difference between the position of the image in the macro-block of the reference frame and that of the image in the macro-block of the current frame, as a motion vector. The motion compensator 220 extracts a prediction macro-block corresponding to the motion vector from the reference frame and motion-compensates for the prediction macro-block of the reference frame.

Then, the motion-compensated prediction macro-block of the reference frame is subtracted from the macro-block of the current frame. The DCT performer 230 DCTs the result of the subtraction and outputs a DCT coefficient. The quantizer 240 quantizes the DCT coefficient and transmits the quantized DCT coefficient to the entropy coder 250. The entropy coder 250 codes the quantized DCT coefficient and outputs texture information. The multiplexer 290 multiplexes the texture information together with the motion vector and outputs an encoded bit stream. When the current frame is the I frame, the DCT performer 230 DCTs the macro-block of the current frame without motion estimation and compensation and outputs a DCT coefficient. Then, the DCT coefficient is quantized, coded, and multiplexed by the quantizer 240, the entropy coder 250, and the multiplexer 290, respectively, and finally output as an encoded bit stream.

A value obtained by subtracting the motion-compensated macro-block of the reference image frame from the macro-block of the current frame is called a residual value. The residual value is encoded to reduce data volume when encoding. Since errors occur in a quantizing process, a moving image created as a bit stream contains the errors that occurred in the DCT and the quantizing processes.

To obtain a reference frame, a quantized residual signal is passed through the de-quantizer 260 and the IDCT performer 270, combined with a motion-estimated/compensated image, and stored in the reference frame storage unit 280. When the current frame is the I frame, it is stored in the reference frame storage unit 280 via the de-quantizer 260 and the IDCT performer 270 without motion-compensation. Therefore, a reference frame stored in the reference frame storage unit 280 includes the current frame with an encoded error that occurred in the DCT and the quantizing processes.

In other words, it is assumed that an original image (frame) is A and a predicted image (frame) after motion-estimation/compensation is B. The DCT performer 230 receives A-B, which is a difference between the original image and the predicted image, and DCTs the A-B. Since an error component E is created in the quantizing process, a bit stream output from the IDCT performer 270 is (A-B)+E. Then, the predicted image B is added to (A-B)+E. Therefore, A+E, that is, the original image with the error component E, is stored in the reference frame storage unit 280 as a reference frame.

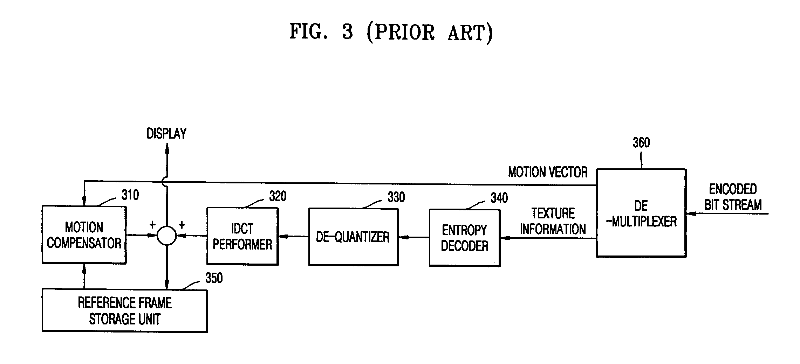

Figure 3 is a block diagram of a conventional moving image decoder.

The moving image decoder includes a motion compensator 310, an IDCT performer 320, a de-quantizer 330, an entropy decoder 340, a reference frame storage unit 350, and a de-multiplexer 360.

The encoded bit stream output from the moving image encoder of Figure 2 is divided into a motion vector and texture information by the de-multiplexer 360. The motion vector is transmitted to the motion compensator 310, and the texture information is decoded by the entropy decoder 340, the de-quantizer 330, and the IDCT performer 320. The motion compensator 310 receives reference frame information from the reference frame storage unit 350 and motion vector information from the moving image encoder of Figure 2 and outputs a predicted image. Then, the predicted image is combined with a decoded image, and a combined image is displayed.

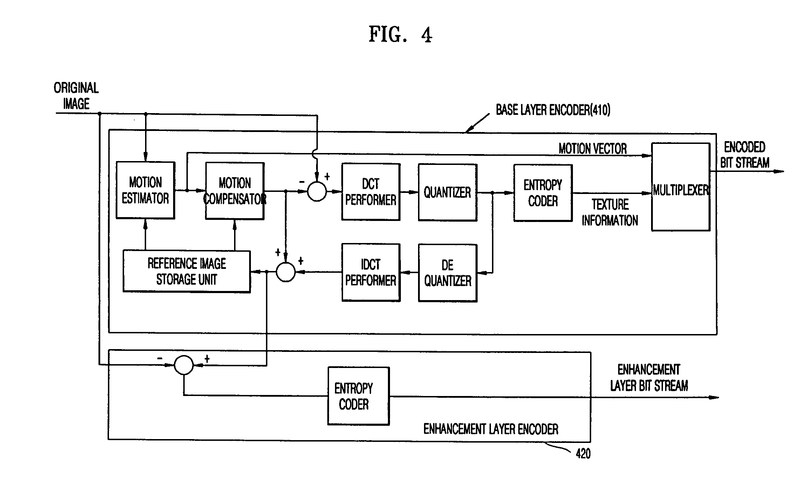

Figure 4 is a block diagram of a scalable moving image encoder according to an embodiment of the present invention.

A scalable coding method is a type of moving image encoding method. In the scalable coding method, an original image is divided into a base layer image and an enhancement layer image and encoded separately. When a scalable decoder decoding a bit stream coded using the scalable coding method receives only a base layer bit stream due to network states or available resources, it decodes the base layer bit stream and outputs a moving image stream with degraded image quality. When the scalable decoder receives a base layer bit stream and an enhancement layer bit stream, it combines an image created by decoding the base layer bit stream with an image created by decoding the enhancement layer bit stream and outputs a high-definition moving image.

Referring to Figure 4, the scalable moving image encoder includes a base layer encoder 410 and an enhancement layer encoder 420. The base layer encoder 410 encodes and outputs a moving image using a general encoding method. The general encoding method denotes a lossy encoding method and includes MPEG-1, MPEG-2, MPEG-4, and H.264 encoding methods. The enhancement encoder 420 subtracts an original image from reference image decoded of the encoded image by the base layer encoder 410, codes a subtracted image using an entropy coder, generates a coded image as texture information, multiplexes the texture information together with a motion vector, and outputs an encoded bit stream.

In other words, an image encoded by the base layer encoder 410 is A+E, which is an original image A plus an error component E. The enhancement layer encoder 420 subtracts the original image A from A+E, entropy-codes the image obtained by subtracting A from A+E, and outputs only the error component E.

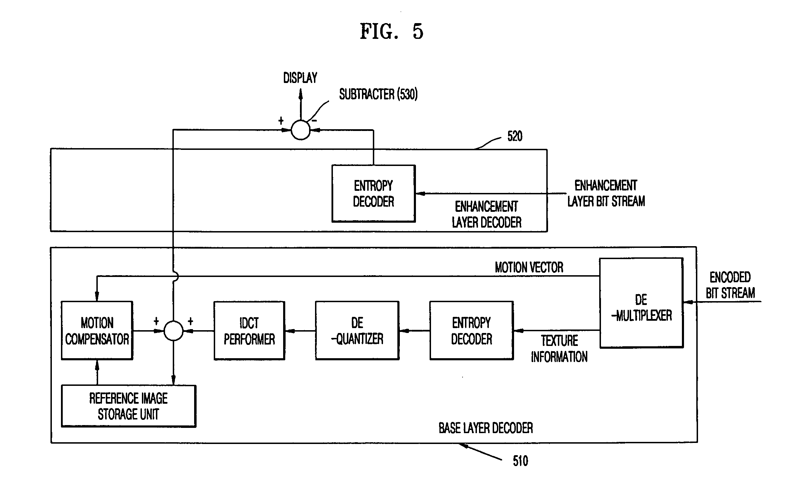

Figure 5 is a block diagram of a scalable moving image decoder according to an embodiment of the present invention. Referring to Figure 5, the moving image decoder includes a base layer decoder 510, an enhancement layer decoder 520, and a subtracter 530. The base layer decoder 510 decodes an original image encoded using a general encoding method. The general decoding method denotes a lossy decoding method and includes MPEG-1, MPEG-2, MPEG-4, and H.264 decoding methods. The enhancement layer decoder 520 decodes a received error component bit stream using an entropy decoder. A decoded error component is transmitted to the subtracter 530, which then subtracts the decoded error component from the original image decoded by the base layer decoder 510 and outputs only the original image without the error component. Therefore, the original image can be perfectly reproduced since an error component E, that is, the decoded error component, decoded by the enhancement layer decoder 520 is subtracted from A+E, which is the original image A plus the error component E created during an encoding process, and then displayed.

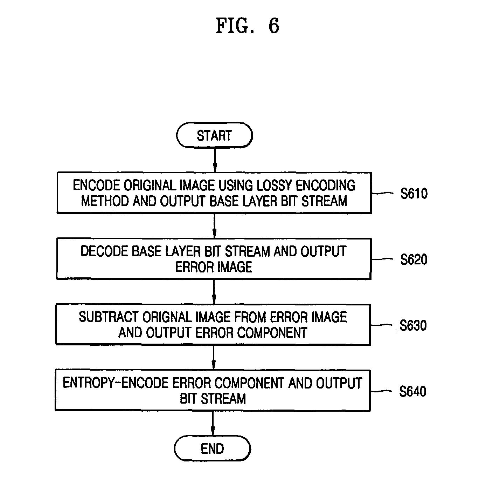

Figure 6 is a flowchart illustrating a scalable moving image encoding method according to the present invention. An original image is encoded using a predetermined lossy encoding method based on motion compensation, frequency conversion, and quantization, and output as a base layer bit stream (Operation S610). The encoding method includes MPEG-1, MPEG-2, MPEG-4, and H.264 encoding methods.

The base layer bit stream is decoded (Operation S620). A decoded base layer bit stream contains an error component. An error image is created by subtracting the original image from the decoded base layer bit stream containing the error component (Operation S630). Only the error component is losslessly entropy-encoded and output as an enhancement layer bit stream (Operation S640).

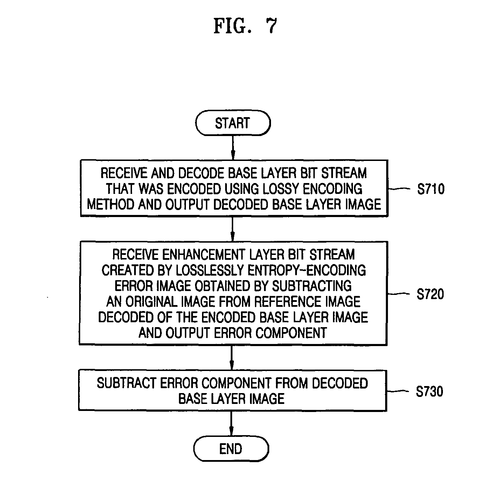

Figure 7 is a flowchart illustrating a scalable moving image decoding method. A base layer bit stream, which was encoded using a predetermined encoding method based on motion compensation, frequency conversion, and quantization, is received, decoded, and output as a decoded base layer image (Operation S710). An enhancement layer bit stream, which was created by lossless entropy-encoding an error image obtained by subtracting an original image from a reference image decoded of the encoded base layer image, is received and decoded (Operation S720). An error component obtained by decoding the enhancement layer bit stream is subtracted from the decoded base layer image obtained in Operation S710 and only the resulting error-free image is output (Operation S730).

The scalable moving image encoding and decoding method described above may be written as a computer program. Codes and code segments of the computer program may be easily derived by computer programmers of ordinary skill in the art. The computer program is recorded onto a computer-readable recording medium. The scalable moving image encoding and decoding method is implemented when the computer program is read and executed by a computer. The computer readable recording medium includes a magnetic recording medium, an optical recording medium, and a carrier wave medium.

As described above, the present invention provides a lossless and scalable encoding/decoding method based on conventional moving image encoding/decoding technologies, thereby offering moving image services with desired quality.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A moving image encoder comprising:
a base layer encoder (410) receiving an original image and encoding the original image using a predetermined lossy encoding method; and
an enhancement layer encoder (420) receiving an image with error created by decoding the encoded original image and receiving the original image, and losslessly entropy-encoding an error component obtained by subtracting the original image from the image with error.

2. The moving image encoder of claim 1, wherein the lossy encoding method comprises an MPEG-1 encoding method, an MPEG-2 encoding method, an MPEG-4 encoding method, or a H.264 encoding method.

3. A moving image decoder comprising:
a base layer decoder (510) receiving a base layer bit stream created by encoding an original image using a predetermined lossy encoding method and decoding the base layer bit stream; and
an enhancement layer decoder (520) receiving an enhancement bit stream created by losslessly entropy-encoding an error component obtained by subtracting the original image from an image with error created by decoding the encoded original image and entropy-decoding the enhancement bit stream.

4. The moving image decoder of claim 3, further comprising a subtracter (530) subtracting the error component decoded by the enhancement layer decoder (520) from a base layer image decoded by the base layer decoder (510) and outputting the result of subtraction.

5. The moving image decoder of claim 3, wherein the loss-encoding method comprises an MPEG-1 encoding method, an MPEG-2 encoding method, an MPEG-4 encoding method, or a H.264 encoding method.

6. A moving image encoding method comprising:
receiving an original image and encoding the original image using a predetermined lossy encoding method; and
receiving an error image created by decoding the encoded original image and receiving the original image, and losslessly entropy-encoding an error component obtained by subtracting the original image from the image with error.

7. The method of claim 6, wherein the loss-encoding method comprises an MPEG-1 encoding method, an MPEG-2 encoding method, an MPEG-4 encoding method, or a H.264 encoding method.

8. A moving image decoding method comprising:
receiving a base layer bit stream created by encoding an original image using a predetermined lossy encoding method, decoding the base layer bit stream, and outputting a decoded base layer image;
receiving an enhancement bit stream created by losslessly entropy-encoding an error component obtained by subtracting the original image from an error image created by decoding the encoded original image and entropy-decoding the enhancement bit stream; and
subtracting the entropy-decoded error component from the decoded base layer image and outputting the result.

9. The method of claim 8, wherein the loss-encoding method comprises an MPEG-1 encoding method, an MPEG-2 encoding method, an MPEG-4 encoding method, or a H.264 encoding method.

10. A computer-readable recording medium recording a program code executing a moving image encoding method in a computer, the moving image encoding method comprising:
receiving an original image and encoding the original image using a predetermined lossy encoding method; and
receiving an error image created by decoding the encoded original image and receiving the original image, and losslessly entropy-encoding an error component obtained by subtracting the original image from the image with error.

11. A computer-readable recording medium recording a program code executing a moving image decoding method in a computer, the moving image decoding method comprising:
receiving a base layer bit stream created by encoding an original image using a predetermined lossy encoding method, decoding the base layer bit stream, and outputting a decoded base layer image;
receiving an enhancement bit stream created by losslessly entropy-encoding an error component obtained by subtracting the original image from an image with error created by decoding the encoded original image and entropy-decoding the enhancement bit stream; and
subtracting the entropy-decoded error component from the decoded base layer image and outputting the result.
